(19) Europäisches Patentamt
European Patent Office
Office européen des brevets

(11) **EP 4 169 880 A1**

(12) **EUROPEAN PATENT APPLICATION**
published in accordance with Art. 153(4) EPC

(43) Date of publication:
**26.04.2023 Bulletin 2023/17**

(21) Application number: **20940919.2**

(22) Date of filing: **17.06.2020**

(51) International Patent Classification (IPC):
***C02F 1/02*** *(2023.01)* ***C02F 1/10*** *(2023.01)*
***C02F 1/12*** *(2023.01)* ***C02F 1/04*** *(2023.01)*
***C02F 103/36*** *(2006.01)* ***C02F 101/38*** *(2006.01)*
***A62D 3/40*** *(2007.01)* ***A62D 101/26*** *(2007.01)*

(52) Cooperative Patent Classification (CPC):
**A62D 3/40; C02F 1/02; C02F 1/04; C02F 1/10; C02F 1/12;** C02F 2101/38; C02F 2103/36

(86) International application number:
**PCT/BR2020/050213**

(87) International publication number:
**WO 2021/253100 (23.12.2021 Gazette 2021/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mac Jee Tecnologia Ltda.**
**04578-000 São Paulo (BR)**

(72) Inventors:
- **JEANNOT, Simon Pierre**
  **04578-000 São Paulo (BR)**
- **FAZOLIN, Gabriela**
  **04578-000 São Paulo (BR)**

(74) Representative: **Meissner Bolte Partnerschaft mbB**
**Patentanwälte Rechtsanwälte**
**Postfach 86 06 24**
**81633 München (DE)**

(54) **METHOD FOR DRYING RED WATER FROM TRINITROTOLUENE PURIFICATION PROCESS, POWDER AND PACKAGED PRODUCT**

(57) The present invention relates in general to a method for drying the effluent from the trinitrotoluene (TNT) purification process, known as red water, that uses spray drying in an efficient, improved, and safe manner. The present invention also covers the characteristics of the obtained powder, the use thereof, and a packaged product containing said powder. The proposed technique suggests the use of lower temperatures at liquid incineration (< 300°C compared to 1000°C), and also the fact that the main target material is not broken down, thereby not generating toxic fumes, and enabling the dry powder to be used for other applications.

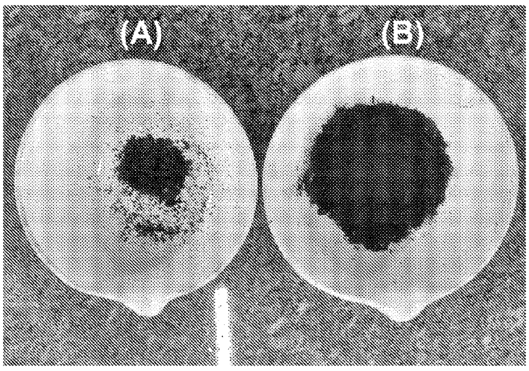


FIG. 1

EP 4 169 880 A1

## Description

Field of Invention

The present invention broadly refers to a method of drying the effluent from the trinitrotoluene (TNT) purification process, known as red water, which uses efficient, improved, and safe spray drying. The present invention also contemplates the characteristics of the powder obtained and indications of use.

Prior Art

Trinitrotoluene, known as TNT, is a covalent chemical compound obtained from the nitration reaction of toluene, which was discovered in 1863 by the German chemist Joseph Wilbrand and, since the beginning of the 20th century, has been used as an explosive due to its high energetic instability. The compound is represented by the following structural formula:

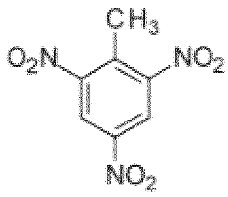

The crystalline solid is insoluble in water, however, soluble in polar solvents, having a melting point, after purification, above 80.10°C and a boiling point of 240°C, which when subjected to intense mechanical shocks and excessive heat produces an extremely exothermic explosion, with a high noise level, in addition to releasing toxic vapors that cause skin and respiratory irritations. This happens due to the presence of enough oxygen in the molecule for its combustion to occur.

The classic production of trinitrotoluene is carried out by means of sequential nitration of toluene (methylbenzene), which normally occurs in three stages. The three sequential toluene nitration reactions are organic substitution reactions, which occur between toluene and nitric acid ($HNO_3$), for example, with one of the hydrogen atoms attached to the aromatic nucleus being replaced by the $NO_2$ group at each step.

After the third stage, which corresponds to the production of the trinitrated compound, there is the formation of a variety of by-products, for example, ash or mineral residues, from sulfuric and nitric acids; 4-5% asymmetric isomers 2,3,4($\beta$); 2.4.5 ($\gamma$) and 2.3.6 ($\delta$); lateral oxidation products such as nitrophenols, trinitrobenzoic acid and tetranitromethane; oxidation products of benzene and xylene, which are normally impurities found in toluene.

TNT must be purified before it can have value as an explosive. Classic examples of purification are presented in patents and published articles.

The prior art teaches that most impurities can be removed by washing processes, with the exception of dinitrotoluene (DNT), nitrobenzenes and xylenes. In addition to residual nitric and sulfuric acids, other water-soluble impurities such as trinitrobenzoic acid can also be removed. Residual water from the first washing step is called yellow water (AA). The AA will contain, in addition to the mineral (acids) and organic (oxidation products) constituents mentioned above, dissolved TNT.

In addition to the purification with water mentioned above, it is also necessary to extract other impurities, such as asymmetric forms of TNT. These unwanted residual species can be removed by conversion to soluble species and extraction through treatment with aqueous solution of sodium sulfite ($Na_2SO_3$), which reacts mainly with asymmetric forms, forming water-soluble sulfonates. For years, this process, also known as the Sellite process, has been used to purify TNT.

The effluent from the Sellite process is called red water (AV) because of its intense red color. Disposing of this waste solution is a serious pollution control problem. The usual and widespread approach to treating red water is to incinerate a concentrated solution of red water in a rotary kiln to produce an ash composed of sodium sulfide ($Na_2S$), which is a toxic compound.

In addition, when exposed to humidity and carbon dioxide, $Na_2S$ and its hydrates emit hydrogen sulfide, another toxic gas. Furthermore, the storage of incineration residue creates several problems, since even properly stored in plastic-lined drums, there is a risk of generating hydrogen sulfide over time.

Currently, the incineration process by rotary slag furnace stands out. This is a process in which waste is incinerated in a rotary kiln at temperatures higher than those used in standard rotary kilns. The rotary slag furnace generally operates between 1100°C and 1300°C, which results in the generation of slag and flue gases. The higher

temperatures of the process allow a more complete combustion of the residues and the encapsulation of the constituents in the generated slag. Sufficient temperatures would be maintained to incinerate the organic compounds and melt the salts contained in the red water, which would then be removed from the furnace in liquid form. The slag generated from the rotary kiln slag was determined to be much more resistant to leaching than ash produced from standard incineration processes.

However, the use of incineration technology also imposes severe restrictions on the enterprise, with a view to environmental preservation. Some of these restrictions impose location at a distance of 30 times the height of your chimney, being at least 300 meters from the boundary of an industrial or rural area. In addition, for the location of the project, the environmental conditions of the area and its surroundings, as well as the predominant wind direction in the region, must be considered, in order to prevent the propagation of atmospheric emissions to cities, population centers and housing, and other public premises, among other restrictions.

Another disadvantage of incineration is the control of gaseous emissions by imposing equipment for washing the generated gases, filters, and monitoring of emissions.

In this process, in addition to the inorganic material basically composed of $NaNO_3$ and $Na_2SO_4$, the gases produced are basically made up of $CO_2$, $H_2O$, $SO_2$ and $NO_x$.

This destructive remediation methodology has some advantages such as treatment efficiency and speed. However, disadvantages such as high maintenance and operation costs, constant risks of accidents at work and non-compliance with the legal parameters for emission of gases, justify the study of new alternatives.

In addition to incineration remediation, alternative technologies have also been proposed, although not completely widespread.

In the United States, as an attempt at an alternative solution, the red water was once sold to paper mills for its sodium and sulfur values, but the US Environmental Protection Agency has classified red water as a hazardous material. Due to this decision, paper mills started to refuse red water in view of severe operational and transportation restrictions. Efforts have been directed towards the development of a pollution-free and waste disposal process for TNT purification.

Biological treatment has also been proposed in previous patents. In some examples, the treatment system may include an effective container to receive a waste product, which may be red water. The treatment system may further include one or more filters in communication with the recipient. The filter or filters may include a polymer carrier material. The polymer carrier material may include specifically selected bacteria.

Another researched solution, but also not disseminated, is the Fenton process, which seeks to use iron oxides as a degradation agent.

Thus, despite the numerous environmental issues, the interest in the production of TNT over time and the undisclosed attempts, the need for new strategies for remediation and use of industrial effluent called red water from the trinitrotoluene production process remains.

Brief Description of the Drawings

Figure 1 shows: (A) Sample before muffle firing and (B) Sample after muffle firing at 120°C.

Figure 2 shows the UV scan of the red water sample diluted in water at a concentration of 100 mcg/mL, analyzed at a wavelength of L 200-1000 nm.

Figure 3 presents differential scanning calorimetry (DSC) analysis.

Figure 4 shows Thermogravimetric Analysis (TGA) of the dry red powder sample with the addition of 1% silicon dioxide.

Brief Description of the Invention

In order to reduce the environmental impact and effectively take advantage of the product generated from the treatment of the aqueous solution from the TNT purification process, the Applicant developed a specific and safe method of drying AV.

The process according to the present invention employs spray drying comprising the following parameters:

- Temperature maintained between about 120 to about 300°C, particularly about 190 to about 205°C;
- Flow between about 250 to about 280 liters/hour;
- Addition of anti-wetting between about 1% and about 5%.

Description of the Invention

In order to avoid the use of high temperatures (>1000°C) and the generation of ash and gases containing toxic compounds from the classic remediation process, the Applicant developed a specific and safe method of spray drying AV.

The process according to the present invention advantageously employs spray drying which, among other benefits, is able to stabilize the powder obtained as a product.

In the scope of the present invention, red water or AV is understood to mean the aqueous solution from the TNT purification process, containing complexed α-TNT, salts such as sodium sulfite and sulfate, a large amount of organic matter, nitrogen, in addition to of various oxidation products.

In addition to energy efficiency, the challenge of proposing a safe process for the remediation of this effluent is to obtain a product that can be used in other products, carefully considering the risk arising from its high explosive power. The literature is rich in warnings about the risks arising from attempts to isolate the by-products present in AV, especially with regard to instability and risk of contamination by toxic products. In this sense, the method according to the present invention employs spray drying, also atomization drying, spray drying, or even, as popularly known in the industry by the term in English, spray drying, the typical equipment being called spray drying. It is a method of producing dry powder from a liquid or suspension by rapid drying with a hot gas that is widely diffused and used in the drying of various thermally sensitive materials, such as food and pharmaceuticals.

The method according to the present invention is characterized by the inlet of red water with about 10 to about 40%, particularly about 20%, of total solids, whereby, after dispersion by spraying and indirect contact with heating gas, the water evaporates and the dry powder flows to a silo with cooling transport, later being collected in packages.

The Applicant found that AV drying has advantages over the commonly used incineration system, such as:

- Uses lower process temperature < 300°C against > 1000°C of incineration;
- By working at reduced temperatures, the material of main interest is not decomposed and therefore there is no generation of toxic gases, with no need to wash gases and vapors originated from the process;
- The operating conditions of reduced temperature and dispersion within an environment of low oxygen concentration promotes the decomposition of unstable components without risk of detonation, so that the material of main interest is not decomposed and therefore there is no generation of toxic gases, without the need to wash gases and vapors originated from the process;
- The dry product can be reused in other applications or destroyed in solid incineration with a lower capacity than the liquid incinerator, requiring less infrastructure and investment; among others.

During the red water drying process in the spray dryer equipment, some care is needed to avoid material decomposition during drying. Process control is important in this case to prevent the material from decomposing causing the start of fires or even explosion.

Red water has several components that can react both in the drying process and after it, for example, the compound tetranitromethane that reacts with sodium sulfite and generates unstable compounds.

In order to ensure that spray drying of red water takes place safely and without decomposing the product, some process controls are critical, such as:
Controlling the drying temperature is essential to ensure that the material does not decompose, using a minimum temperature of around 120°C and a maximum of around 300°C, particularly around 190 to around 205°C.

The addition of anti-wetting components, such as silicon dioxide, tricalcium phosphate or their mixtures, for example, before the drying process promotes the formation of dense powders, favoring the reduction of the permanence of material inside the chamber, preventing the material from depositing and cause auto-ignition. Concentration of anti-wetting additive in amounts between about 1% and about 5% is suggested in order to achieve better results.

It was observed in the field that the dried material without the addition of anti-wetting additive, or in concentrations lower than about 1%, was deposited in the chamber because it is a hygroscopic material. In contact with the humidity inside the drying chamber, the dry material was accumulating and did not flow into the package as desired. The time for deposition of the material can be of approximately 20 minutes, being necessary to stop the process for cleaning and restart the drying. The addition of antiwetting can reduce the time for weekly cleanings in industrial processes.

In addition, in a preferred embodiment, the equipment may contain a protection window, directed to an area where there is a minimum of people passing through. The window must be calculated for the dry product, based on the deflagration index (kst, bar.m/s) of the material. Thus, it will allow that, in case of problems such as pressure increase inside the equipment, the explosion is kept inside the chamber or directed to a protected area.

Still, regarding a preferred embodiment, the product outlet valve must prevent dry powder friction.

Also, in a preferred embodiment, the drying system can have a powder cooling stage, preventing the hot powder from coming into contact with the ambient air, preventing self-oxidation and the start of fires. For this purpose, the equipment may have spark and flame detectors during the process, from the drying chamber to the packaging, in order

to avoid self-ignition of the material. The system must provide containment with pressurized water, in case of fire.

Tests with dry powder indicate that temperatures above 60°C can cause auto-ignition, in view of the possibility of auto-oxidation.

Additionally, in a preferred embodiment, the process can be well grounded in order to avoid static electricity, since the material studied is combustible and can start as a result of static electricity.

Another object of the present invention is the powder obtained according to the described method, characterized by being a reddish, fluid powder, density of 0.4 g/cm$^3$ and humidity around 3%. It is desirable to maintain a humidity lower than 5% to avoid further agglomeration of solids, preferably lower than 1.5%. The powder according to the present invention is able to pass through more than 65% on the 200 Mesh sieve.

In another embodiment of the present invention, the final powder product obtained can be preserved in a package that avoids static electricity and protects the material from absorbing humidity.

The following examples serve to illustrate aspects of the present invention without, however, being limiting in any way.

Examples

The raw red water, the result of the present study and removed directly from the second washer of the production of 2,4,6 trinitrotoluene, presented the following physicochemical characteristics:

pH: 6-7
Density 1.12 g/cm$^3$
Solids: 20%
Odor: Odorless
Appearance: Red liquid, opaque

Initial tests were carried out in a pilot-scale spray dryer (flow rate: 2 liters/hour) using the following parameters:

- Inlet temperature: 190°C
- Output Temperature: 115°C
- Concentration of Silicon Dioxide ($SiO_2$): 0.5 and 1% and control without $SiO_2$

After the tests carried out, it was concluded that the addition of silicon dioxide as an anti-wetting agent is necessary since the yield and fluidity of the powder increase, as well as the time of use of the equipment without stopping necessary for cleaning. The ideal silica concentration stipulated on a pilot scale was 1%, as it presented fine powder, fluid and little material adhered to the drying chamber. The moisture of the dry powder with silicon dioxide is 3%. Red powder without added silica is extremely hygroscopic and tends to cling due to moisture in the air.

The ash content analysis was performed in triplicate, in a muffle with temperature stabilized at 200°C. Three samples of approximately 2 grams were weighed in properly oven-dried crucibles with tared weight. The initial mass was noted. During the heating of the crucible in a muffle, the sample was observed, and it was noted that at a temperature of 120°C the material started to burn spontaneously, as shown in Figure 1.

After burning the organic material and constant mass of the product in the crucible, the product was cooled, and its final mass was recorded. The ash content was found using the following formula:

$$Ash\ Content\ \% - \frac{(Final\ Ash\ Weight - Weight\ of\ Empty\ Pan)x100}{Initial\ Sample\ Weight}$$

Ash content % - (Final ash weight – Weight of the empty pan) x 100 / Initial sample weight

The ash content found was 49.7 ± 7.9%. This content refers to the inorganic residue (sodium, potassium, calcium and other mineral compounds) remaining from the burning of organic matter.

The granulometric analysis was performed on 4 sieves with different openings as shown in Table 1. With this test, it was possible to conclude that the powder dried through the spray dryer technique has an average particle size of 75 μm.

Table 1 - Particle size analysis of dry red powder

| Mesh | Slit (μm) | Retained material (%) |
|---|---|---|
| 25 | 710 | 0 |
| 60 | 250 | 0 |
| 200 | 75 | 32 |
| 500 | 25 | 100 |

The solid red water sample was diluted in distilled water at a concentration of 100 mcg/mL, showing an absorbance of 0.6 in this score. The absorption spectrum of the sample was determined in SpectraMax i3 equipment (Molecular Devices®) through UV plate reading with measurement at wavelengths of λ200-1000 nm. As shown in Figure 2, the sample showed 3 peaks: 230, 350 and 980 nm. The first refers to the organic component - dinitrotoluene (DNT) - as demonstrated in the literature, as the degradation of DNT forms products with absorption between 220-250 nm. The 350 nm peak refers to the formation of chromophore compounds with an azoxy group, characterized by organic substances with a double bond between two nitrogen atoms (-N=N-), which is linked to aromatic rings, in the presence of functional structures as the amino ($NH_2$) or sulfonic ($SO_3H$) group. The last (980 nm) is the peak of the distilled water used for sample dilution.

Per differential scanning calorimetry (DSC) analysis, analyzed from 25-500°C in the Mettler Toledo equipment, it was found that the red powder presents endothermic peaks at temperatures between 130-200°C and exothermic between 270-350°C (Figure 3). In the thermogravimetric analysis (TGA) (Figure 4), the Mettler Toledo equipment, model TGA/SDTGA 851, was used at a temperature of 20-600°C and an atmosphere with nitrogen ($N_2$).

It is possible to observe that several secondary reactions occur simultaneously with the main decomposition reaction. The temperature of 108°C is the lowest temperature at which the beginning of the mass change was detected and the temperature of 488°C indicates that the mass change was completed, therefore, there is no loss of mass from that point on. The peak at 70°C demonstrates that the organic product contained in the matter is dinitrotoluene, as previously explored.

As it is a powder derived from the manufacture of the explosive, dust explosion severity parameters are important for the correct dimensioning of the drying equipment. Values of maximum pressure generated in the explosion ($P_{max}$), speed of pressure increase $(dP/dt)_{max}$ and deflagration index (Kst) were analyzed according to BS EN 14034-1: 2004 and BS EN 14034-2: 2006. Samples are classified as follows:

- ST Class 0 - Kst value = 0
- ST class 1 - Kst value less than 200 bar.m/s
- ST class 2 - Kst value between 200 and 300 bar.m/s
- ST class 3 - Kst value greater than 300 bar.m/s

The tests were carried out in a 20-liter sphere and allow determining the maximum pressure developed in the explosion of substances and mixtures and, simultaneously, the speed of increase in pressure generated in the event. These data are essential for determining the consequences caused by the explosion and for defining equipment protection devices, installations and mitigating measures in emergency plans as well.

Table 2 shows the parameters found for the red powder. The classification of the analyzed powder is ST class 1, as it has a deflagration index lower than 200 bar.m/s, even lower than other combustible powders such as wood Kst: 224 bar.m/s (ST class 2) and aluminum powder Kst 515 bar.m/s (ST class 3).

Table 2 - Red powder explosion severity parameters.

| Parameters | Results |
|---|---|
| $P_{max}$ (bar) | 7.3 ± 10% |
| $(dP/dt)_{max}$ (bar/s) | 261 ± 20% |
| Kstmax (bar.m/s) | 71 ± 20% |

It is to be understood that the embodiments described above are merely illustrative and that any modification thereto may occur to a person skilled in the art. Accordingly, the present invention is not to be considered limited to the embodiments described herein.

The person skilled in the art will readily know, as per the teachings disclosed in this text and in the examples presented, advantages of the invention and may propose variations and equivalent alternatives for the accomplishment thereof, without, nonetheless, departing from the scope of the invention, as defined in the appended claims.

## Claims

1. DRYING METHOD FOR RED WATER FROM THE TRINITROTOLUENE PURIFICATION PROCESS, **characterized in that** it comprises spray drying red water with about 10 to about 40% of total solids, at a temperature between about 120°C and a maximum of about of 300°C.

2. METHOD, according to claim 1, **characterized in that** red water has about 20% of total solids.

3. METHOD, according to claim 1, **characterized in that** the temperature varies between about 190 to about 205°C.

4. METHOD, according to claim 1, **characterized in that** at least one anti-wetting component is added before spray drying.

5. METHOD, according to claim 4, **characterized in that** the anti-wetting component is selected from silicon dioxide, tricalcium phosphate or mixtures thereof.

6. METHOD, according to one of claims 4 or 5, **characterized in that** the concentration of anti-wetting additive comprises about 1% and about 5%.

7. METHOD, according to one of claims 1 to 6, **characterized in that** the method avoids static electricity by grounding.

8. METHOD, according to one of claims 1 to 7, **characterized in that** it comprises the final step of cooling at a temperature below 60°C.

9. POWDER, obtained by the method according to one of claims 1 to 8, **characterized by** the fact that it is reddish, fluid and has a density of 0.4 g/$cm^3$ and humidity of about 3%.

10. POWDER, according to claim 9, **characterized in that** is able to pass through more than 65% in the 200 Mesh sieve.

11. PACKAGED PRODUCT, **characterized by** comprising the powder defined in claim 10 in packaging that avoids static electricity and prevents absorption of moisture from the air.

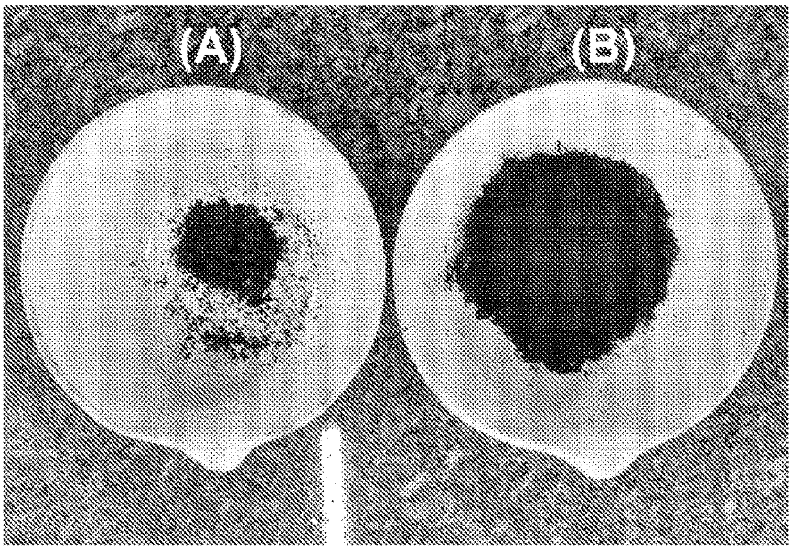
(A)
(B)

FIG. 1

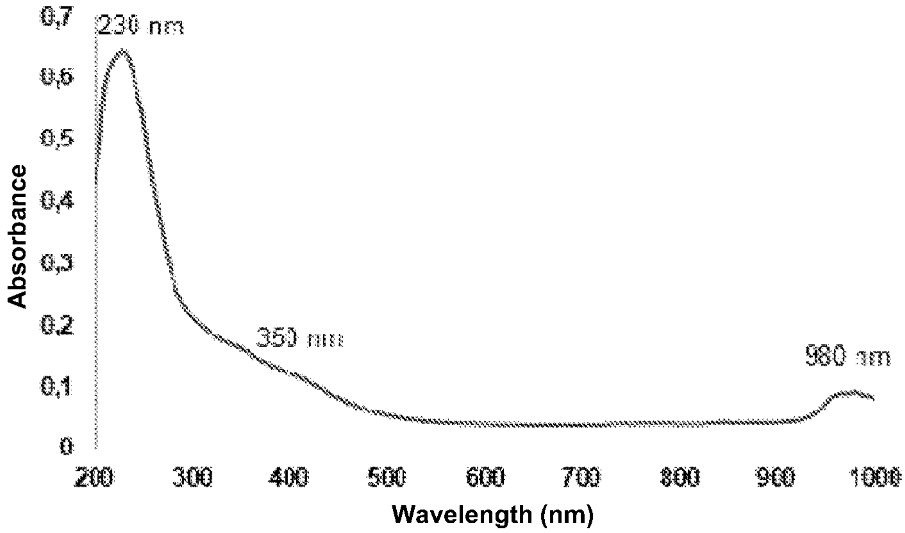
0,7
0,6
0,5
0,4
0,3
0,2
0,1
0
Absorbance
230 nm
350 nm
980 nm
200
300
400
500
600
700
800
900
1000
Wavelength (nm)

FIG. 2

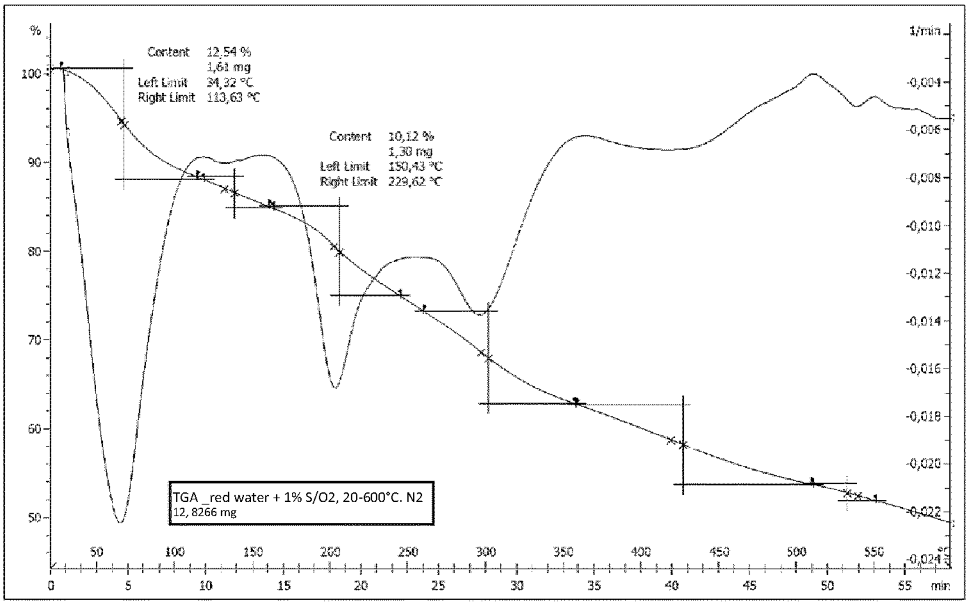
Content 12,54 %
1,61 mg
Left Limit 34,32 °C
Right Limit 113,63 °C
Content 10,12 %
1,30 mg
Left Limit 150,43 °C
Right Limit 229,62 °C
TGA _red water + 1% S/O2, 20-600°C. N2
12, 8266 mg
%
1/min
min
°C

FIG. 3

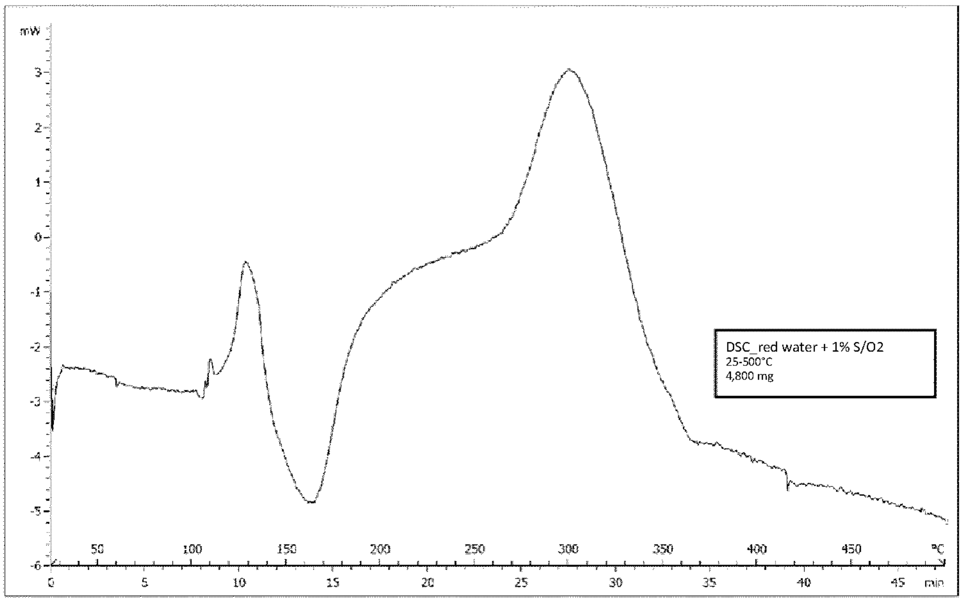
DSC_red water + 1% S/O2
25-500°C
4,800 mg
mW
°C
min

FIG. 4

**INTERNATIONAL SEARCH REPORT**

International application No.
**PCT/BR2020/050213**

A. CLASSIFICATION OF SUBJECT MATTER

**C02F1/02 (2006.01), C02F1/10 (2006.01), C02F1/12 (2006.01), C02F1/04 (2006.01), C02F103/36 (2006.01), C02F101/38 (2006.01), A62D3/40 (2007.01), A62D101/26 (2007.01)**
**CPC: C02F1/02, C02F1/10, C02F1/12 A62D 3/40, A62D2101/38, C02F2101/003,C06B25/08,C02F2103/36**

According to International Patent Classification (IPC) or to both national classification and IPC

B. FIELDS SEARCHED

Minimum documentation searched (classification system followed by classification symbols)

**C02F A62D**

Documentation searched other than minimum documentation to the extent that such documents are included in the fields searched

**GOOGLE PATENTS/SCHOLAR**

Electronic data base consulted during the international search (name of data base and, where practicable, search terms used)

**EPOQUE, ESPACENET**

C. DOCUMENTS CONSIDERED TO BE RELEVANT

| Category* | Citation of document, with indication, where appropriate, of the relevant passages | Relevant to claim No. |
|---|---|---|
| Y | **Maloney, Stephen W.; Boddu M. Veera; Phull Kotu K.; Hao, Oliver J. - TNT Redwater treatment by Wet Air Oxidation - US Army Corps of Engineers - November 1994 (pages 35-5° paragraph; 71- 2° paragraph; 81- 4o paragraph; 83- 1° paragraph; 88- 2° paragraph)** | 1 to 8 |
| Y | **US 4499833 A (ROCKWELL INTERNATIONAL CORP [US]) 19 fevereiro 1985 (1985-02-19) (abstract, column 4 - lines 11 to 14 and 43 to 65 and Figure 1)** | 1 to 11 |
| Y | **CN 102627363 A (BEIJING INST TECHNOLOGY) 08 agosto 2012 (2012-08-08) (Translated document : page3 - item 2; page6 -line 1)** | 9 to 11 |

[X] Further documents are listed in the continuation of Box C. [X] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16/10/2020** | **29/10/2020** |

| Name and mailing address of the ISA/ | Authorized officer |
|---|---|
| INSTITUTO NACIONAL DA PROPRIEDADE INDUSTRIAL<br>INPI<br>Rua Mayrink Veiga nº 9, 6º andar<br>cep: 20090-910, Centro - Rio de Janeiro/RJ<br>Facsimile No. +55 21 3037-3663 | Telephone No. |

Form PCT/ISA/210 (second sheet) (January 2015)

INTERNATIONAL SEARCH REPORT

International application No. PCT/BR2020/050213

C (Continuation). DOCUMENTS CONSIDERED TO BE RELEVANT

| Category* | Citation of document, with indication, where appropriate, of the relevant passages | Relevant to claim No. |
|---|---|---|
| A | Barreto-Rodrigues, Mareio; Silva T. Flávio; Paiva, Teresa C.B. - Combined zero-valent iron and fenton processes for the treatment of Brazilian TNT industry wastewater - Journal of Hazardous Materials 165 (2009) 1224-1228. | 1 to 11 |
| A | Barrekette, Euval S. - POLLUTION Engineering and Scientífc Solutions - Environmental Science Research -Proceedings of the First International Meeting of the Society of Engineering Science held in Tel Aviv, Israel - June 12-17, 1972 - February 1973 (pg 288-303) | 1 to 11 |
| A | PEI Associaties, Inc. Technology Evaluation For Treatment/Disposal Of TNT Red Water - USATHAMA - U.S. Army Toxic and Hazardous Materials Agency - April 1990 (summary, 1.2.3; 3.2.5; 4.1) | 1 to 11 |
| A | US 3981934 A (DYNO INDUSTRIER AS) 21 September 1976 (1976-09-21) | 1 to 11 |
| A | US 5207176 A (ICI EXPLOSIVES USA INC [US]) 04 May 1993 (1993-05-04) | 1 to 11 |

Form PCT/ISA/210 (continuation of second sheet) (January 2015)

**INTERNATIONAL SEARCH REPORT**
Information on patent family members

International application No.
PCT/BR2020/050213

| | | | |
|---|---|---|---|
| US 4499833 A | 1985-02-19 | CA 1223726 A | 1987-07-07 |
| | | EP 0111697 A1 | 1984-06-27 |
| | | JP S59132400 A | 1984-07-30 |
| | | JP H0634102 B2 | 1994-05-02 |
| | | US 4668435 A | 1987-05-26 |
| CN 102627363 A | 2012-08-08 | None | |
| US 3981934 A | 1976-09-21 | CA 1038887 A | 1978-09-19 |
| | | DE 2444600 A1 | 1975-04-03 |
| | | FR 2244732 A1 | 1975-04-18 |
| | | GB 1467417 A | 1977-03-16 |
| | | NO 131340 B | 1975-02-03 |
| | | SE 7411789 L | 1975-03-21 |
| | | SE 398638 B | 1978-01-09 |
| US 5207176 A | 1993-05-04 | CA 2055552 A1 | 1992-05-21 |
| | | EP 0486860 A2 | 1992-05-27 |
| | | MX 9102113 A | 1992-11-01 |
| | | MX 174005 B | 1994-04-13 |

Form PCT/ISA/210 (patent family annex) (January 2015)